# EUROPEAN PATENT SPECIFICATION

(11) **EP 4 477 633 B1**
(45) Date of publication and mention of the grant of the patent: **09.12.2026**
(21) Application number: 23779558.8
(22) Date of filing: 14.03.2023
(51) Int. Cl.: C01B 21/068, C04B 35/587, C04B 35/593

(54) **SILICON NITRIDE POWDER AND METHOD FOR PRODUCING SAME, AND SILICON NITRIDE SINTERED BODY AND METHOD FOR PRODUCING SAME**
SILICIUMNITRIDPULVER UND VERFAHREN ZUR HERSTELLUNG DAVON SOWIE SILICIUMNITRIDSINTERKÖRPER UND VERFAHREN ZUR HERSTELLUNG DAVON
POUDRE DE NITRURE DE SILICIUM ET PROCÉDÉ POUR SA PRODUCTION ET CORPS FRITTÉ EN NITRURE DE SILICIUM ET PROCÉDÉ POUR SA PRODUCTION

(30) Priority: 31.03.2022 JP 2022060115
(43) Date of publication of application: 18.12.2024
(73) Proprietor: Denka Company Limited, Tokyo 103-8338 (JP)
(72) Inventor: NAKAMURA, Yuzo, Tokyo 103-8338 (JP); MIYASHITA, Toshiyuki, Tokyo 103-8338 (JP)
(74) Representative: Hoffmann Eitle
(86) International application number: PCT/JP2023/009857
(87) International publication number: WO 2023/189539

(56) References cited:
- EP-A1- 1 914 213
- WO-A1-2007/018050
- JP-A- S63 162 511
- JP-A- S63 162 511
- JP-A- S63 319 264
- JP-A- S63 319 264

## Description

### Technical Field

The present disclosure relates to a silicon nitride powder and a method for manufacturing the same, and a silicon nitride sintered body and a method for manufacturing the same.

### Background Art

Silicon nitride is a material excellent in strength, hardness, toughness, heat resistance, corrosion resistance, thermal shock resistance, and the like. Therefore, the silicon nitride sintered body is used for various industrial parts such as die casting machines and melting furnaces, automobile parts, and the like. In addition, since the silicon nitride sintered body is also excellent in mechanical properties at high temperatures, it has been studied to use the silicon nitride sintered body for gas turbine parts required to have high-temperature strength and high-temperature creep properties.

It is known that carbon and oxygen contained in a silicon nitride powder as a sintering material affect the strength of a silicon nitride sintered body. In order to obtain a silicon nitride sintered body having high strength, Patent Document 1 proposes to reduce the amounts of oxygen and carbon by using a silicon nitride powder obtained by an imide decomposition method. Further, Patent Document 2 proposes a technique for obtaining a silicon nitride-based sintered body having high bending strength by using a silicon nitride-based powder having a β fraction of 30 to 100% and an oxygen content of less than 0.5% by weight.
Patent Document 3 relates to the production of silicon nitride by a silica reduction method in which a mixture of silica and carbon is heated in a mixed gas of NH₃ and N₂. Patent Document 4 relates to a silicon nitride sintered body produced from a raw material powder composition comprising silicon nitride whiskers composed of an α-phase Si₃N₄, and silicon nitride whiskers composed of a β-phase Si₃N₄, Y₂O₃ and silicon nitride powder. Patent Document 5 relates to silicon nitride substrate comprising a silicon nitride sintered body obtainable by sintering a silicon nitride powder in the presence of a sintering aid comprising MgO, Y₂O₃ and SiO₂.

### Citation List

### Patent Literature

[Patent Document 1] Japanese Unexamined Patent Publication No. H5-193914
[Patent Document 2] Japanese Unexamined Patent Publication No. 2004-262756
[Patent Document 3] Japanese Patent Publication No. JP S63-162511 A
[Patent Document 4] Japanese Patent Publication No. JP S63-319264 A
[Patent Document 5] European Patent Publication No. EP 1 914 213 A1

### Summary of Invention

### Technical Problem

The silicon nitride sintered body is used for various applications because of its excellent strength. If it is lightweight, it can contribute to improvement in energy efficiency of a vehicle or the like, for example. In addition, the lighter the structural material is, the more easily it can be installed, and the more the durability of the structure itself is improved. Accordingly, the present disclosure provides a silicon nitride sintered body having low manufacturing cost, low density, and high strength, and a method for manufacturing the same. Further, the present disclosure provides a silicon nitride powder that enables manufacturing a silicon nitride sintered body having low density and high strength at a low manufacturing cost, and a method for manufacturing the same.

### Solution to Problem

In an aspect of the present disclosure, there is provided a silicon nitride powder containing silicon nitride and carbon, wherein a mass proportion Cp of the carbon with respect to the entire powder is 0.05% or more, a mass proportion Cs of carbon contained in a surface portion of the powder with respect to the entire powder is 0.05% or less, and a mass proportion Os of oxygen contained in the surface portion of the powder with respect to the entire powder is 0.9% or less measured by the methods specified in claim 1.

The silicon nitride powder can be manufactured by a low-cost manufacturing method because the mass proportion Cp of carbon with respect to the entire powder is a predetermined value or more. In addition, since the mass proportion Cs of carbon contained in the surface portion of the powder is equal to or less than the predetermined value, β-phase of silicon nitride is likely to be generated when the powder is used as a sintering material. The β-phase that is a columnar crystal tends to be more difficult to densify than α-phase, but has a higher strength than the α-phase. Therefore, a silicon nitride sintered body having low density (for example, relative density: 95% or less) and high strength may be manufactured at a low manufacturing cost.

In the silicon nitride powder, a ratio of the mass proportion Cs to a mass proportion Ci of carbon contained in an interior portion of the powder with respect to the entire powder may be 0.6 or less. In such a silicon nitride powder, since the amount of carbon contained in the surface portion of the powder is small, when the silicon nitride powder is used as a sintering material, the β-phase is more likely to be generated during liquid phase sintering. In addition, carbon in the interior portion of the powder forms silicon carbide and is combined with silicon nitride. Due to these factors, a silicon nitride sintered body having a lower density and a higher strength can be obtained.

In the silicon nitride powder, a mass proportion Os of oxygen contained in the surface portion of the powder with respect to the entire powder and the mass proportion Cs of the carbon may satisfy the following expression (I). Such a silicon nitride powder has a sufficiently large ratio of oxygen to carbon in the surface portion, and thus can promote liquid phase sintering when used as a sintering material. Therefore, the grain boundary strength is improved, and a silicon nitride sintered body having sufficiently high strength can be obtained.$Os / Cs \geq 10$ (I).

In the silicon nitride powder, the mass proportion Os of oxygen contained in the surface portion of the powder with respect to the entire powder is 0.9% or less. When such a silicon nitride powder is used as a sintering material, excessive densification can be prevented, and an excessive increase in the density of the silicon nitride sintered body can be prevented.

A BET specific surface area of the silicon nitride powder may be 10 to 14 m²/g. When such a silicon nitride powder is used as a sintering material, sintering proceeds smoothly. In addition, the uniformity of the microstructure of the silicon nitride sintered body can be improved. Therefore, it is possible to reduce variations in characteristics such as the strength of the silicon nitride sintered body.

An α-phase content (a proportion of the α-phase) of the silicon nitride powder may be 94% or more. Such a silicon nitride powder is easily sintered, and the strength is easily improved by the generation of the β-phase. Therefore, it is possible to sufficiently increase the strength of the silicon nitride sintered body while maintaining the density of the silicon nitride sintered body at a sufficiently low level.

In an aspect of the present disclosure, there is provided a method for manufacturing silicon nitride powder, the method including: molding a kneaded material containing a silicon powder and an organic binder to obtain a molded body; degreasing the molded body by heating at 900°C or more and less than 1100°C for 1 hour or more; firing the molded body under a mixed atmosphere containing nitrogen and at least one selected from the group consisting of hydrogen and ammonia to obtain a fired product containing silicon nitride and carbon; and pulverizing the fired product.

In the above-described manufacturing method, the silicon nitride powder is manufactured using the kneaded material containing the silicon powder and the organic binder. Therefore, carbon derived from the organic binder remains in the silicon nitride powder. However, the molded body of the kneaded material is heated at 900°C or more and less than 1100°C for 1 hour or more for degreasing. Therefore, most of the organic binder is scattered, and the amount of carbon in the surface portion of the silicon particles can be reduced. On the other hand, it is considered that carbon originally contained in the interior portion of the silicon particles and carbon diffused into the interior portion of the silicon particles by heating remain in the silicon nitride particles. In such a manufacturing method, since the silicon particles may contain some impurities, the silicon nitride powder can be manufactured at a low manufacturing cost. In addition, when such a silicon nitride powder is used as a sintering material, since carbon contained in a surface portion of the powder is sufficiently reduced, β-phase of silicon nitride is likely to be generated during sintering. The β-phase that is a columnar crystal tends to be more difficult to densify than the α-phase, but has a higher strength than the α-phase. Therefore, a silicon nitride sintered body having low density (for example, relative density: 95% or less) and high strength can be obtained at low manufacturing cost.

In the above-described manufacturing method, in the silicon nitride powder, a mass proportion Cp of carbon with respect to the entire powder may be 0.05% or more, and a mass proportion Cs of carbon contained in a surface portion of the powder with respect to the entire powder may be 0.05% or less.

In the present disclosure, there is described by way of example, a silicon nitride sintered body (falling outside the scope of the appended claims) having a bending strength of 700 MPa or more, wherein a ratio of the bending strength to a bulk density is 240 MPa·cm³/g or more. Such a silicon nitride sintered body has low density and high strength. Therefore, it can be suitably used as, for example, a member of a vehicle or a structure.

In an aspect of the present disclosure, there is provided a method for manufacturing a silicon nitride sintered body, the method including: obtaining a silicon nitride sintered body by using a sintering material containing any one of the above-described silicon nitride powders. In this manufacturing method, since the sintering material containing any one of the above-described silicon nitride powders is used, a silicon nitride sintered body having a low density and a high strength can be obtained.

### Advantageous Effects of Invention

It is possible to provide a silicon nitride sintered body having low manufacturing cost, low density, and high strength, and a method for manufacturing the same. It is possible to provide silicon nitride powder capable of manufacturing a silicon nitride sintered body having low density and high strength at a low manufacturing cost, and a method for manufacturing the silicon nitride powder.

### Brief Description of Drawings

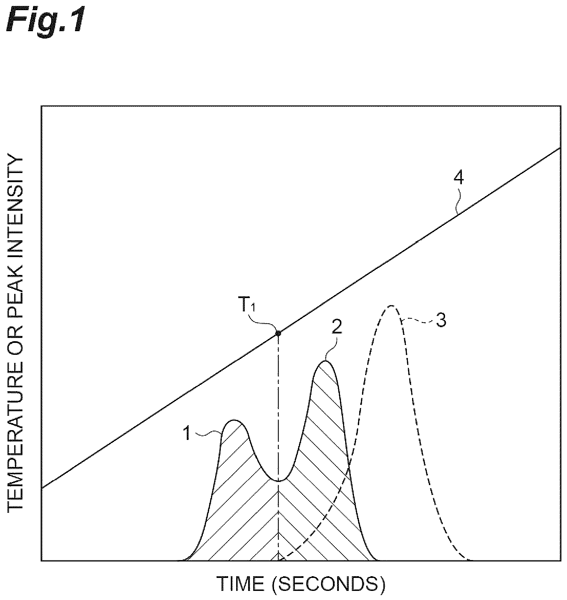

FIG. 1 is a diagram illustrating an example of an oxygen/nitrogen analysis chart.

### Description of Embodiments

Hereinafter, embodiments of the present disclosure will be described. Note that the following embodiments are examples for describing the present disclosure, and are not intended to limit the present disclosure to the following contents. The numerical range indicated by the symbol "-" includes a lower limit value and an upper limit value. That is, the numerical range indicated by "x-y" means x or more and y or less. A numerical range obtained by replacing the upper limit or the lower limit of each numerical range in each embodiment with a numerical value of any one of the examples is also included in the present disclosure. Both a case where one of the plurality of materials exemplified in parallel in each embodiment is contained alone and a case where two or more of the plurality of materials are contained in combination are included in the present disclosure.

A silicon nitride powder (Si₃N₄ powder) according to an embodiment is a silicon nitride powder containing silicon nitride and carbon, in which a mass proportion Cp of carbon (total amount of carbon) with respect to the entire powder is 0.05% or more, a mass proportion Cs of carbon contained in a surface portion of the powder with respect to the entire powder is 0.05% or less, and a mass proportion Os of oxygen contained in the surface portion of the powder with respect to the entire powder is 0.9% or less. Carbon contained in the silicon nitride powder may be contained as elemental carbon, or may be contained as an organic compound contained in an organic binder, for example. When the carbon is contained as a compound such as an organic compound, the mass proportion of carbon is obtained by converting the compound into carbon.

Since the silicon nitride powder has the mass proportion Cp of carbon (total carbon) of 0.05% or more, the silicon nitride powder can be manufactured without using an imide decomposition method requiring a high manufacturing cost. In addition, the tolerance level of impurities contained in the raw material is high. Therefore, it can be manufactured at a low manufacturing cost.

The mass proportion Cp of carbon contained in the silicon nitride powder with respect to the entire silicon nitride powder may exceed 0.05%, may be 0.07% or more, or may be 0.09% or more. Accordingly, the manufacturing cost can be further reduced. In addition, when the silicon nitride powder is used as a sintering material, silicon carbide (SiC) is generated, and a composite of silicon nitride and silicon carbide is formed, so that high strength of the silicon nitride sintered body can be maintained.

The mass proportion Cp of carbon contained in the silicon nitride powder with respect to the entire silicon nitride powder may be 0.16% or less, or may be 0.13% or less. Accordingly, when the silicon nitride powder is used as a sintering material, the β-phase is more easily generated, and the strength can be further improved while the density of the silicon nitride sintered body is maintained low. An example of the range of the mass proportion Cp of carbon with respect to the entire powder is 0.05%-0.16%.

The mass proportion Cs of carbon contained in the surface portion of the silicon nitride powder with respect to the entire silicon nitride powder is obtained by dividing the weight of carbon contained in the surface portion of the silicon nitride powder by the weight of the entire silicon nitride powder. A mass proportion Ci of carbon contained in the interior portion of the silicon nitride powder with respect to the entire silicon nitride powder is obtained by dividing the weight of carbon contained in the interior portion of the silicon nitride powder by the weight of the entire silicon nitride powder. Therefore, the following expression (II) holds for the mass proportion Cp, Cs, and Ci. $Cp \left[%\right] = Cs \left[%\right] + Ci \left[%\right]$ (II)

The mass proportion Cs of carbon contained in the surface portion of the powder with respect to the entire powder may be less than 0.05%, may be 0.04% or less, or may be 0.03% or less. By sufficiently reducing the amount of carbon contained in the surface portion in this way, the reaction with oxygen contained in the surface portion of the powder is prevented, and liquid phase sintering proceeds smoothly. In addition, the β-phase is easily generated during sintering, and excessive densification is prevented, so that a silicon nitride sintered body having a low density and a higher strength can be obtained. The lower limit of the mass proportion Cs of carbon contained in the surface portion of the powder with respect to the entire powder may be 0.005% from the viewpoint of sufficiently reducing the manufacturing cost.

The mass proportion Ci of carbon contained in the interior portion of the powder with respect to the entire powder may be 0.05%-0.15%, or may be 0.08%-0.12%. With such a mass proportion Ci, the balance between the mass proportion Cp and the mass proportion Cs can be sufficiently improved.

The ratio (Cs/Ci) of the mass proportion Cs to the mass proportion Ci may be 0.6 or less, 0.5 or less, or 0.3 or less. In such a silicon nitride powder, since the amount of carbon contained in the surface portion of the powder is small, when the silicon nitride powder is used as a sintering material, the β-phase is more likely to be generated during liquid phase sintering. In addition, carbon in the interior portion of the powder forms silicon carbide, which then combines with silicon nitride to form a composite. Due to these factors, a silicon nitride sintered body having a lower density and a higher strength can be obtained. From the viewpoint of further reducing the manufacturing cost, the ratio (Cs/Ci) may be 0.05 or more. An example of the numerical range of the ratio (Cs/Ci) is 0.05-0.6.

The mass proportion Cp, Cs, and Ci in the present specification are obtained by the following procedure. The amount of carbon in the silicon nitride powder can be analyzed using a carbon/sulfur analyzer. A powder sample for measurement is heated from 20°C to 2000°C at a temperature rise rate of 10°C/sec in an oxygen atmosphere. As the temperature rises, the desorbed carbon combines with oxygen to form carbon monoxide or carbon dioxide. Since silicon nitride is decomposed at a temperature higher than 1400°C, all carbon on the surface and in the interior portion of the powder becomes carbon monoxide or carbon dioxide. The mass proportion Cp of carbon contained in the entire silicon nitride powder can be determined by detecting, with an infrared detector, the carbon monoxide and carbon dioxide thus produced.

The mass proportion Cs of carbon contained in the surface portion of the powder with respect to the entire powder is measured by heating the powder in an air atmosphere to a temperature at which silicon nitride is not decomposed. Specifically, the temperature is increased from 20°C to 1000°C at a temperature rise rate of 10°C/sec, and the temperature is held at 1000°C for 15 minutes. In this case, only carbon contained in the surface portion of the silicon nitride powder is combined with oxygen to form carbon monoxide or carbon dioxide. The mass proportion Cs of carbon contained in the surface portion of the silicon nitride powder can be determined by detecting, with an infrared detector, the carbon monoxide and carbon dioxide thus produced.

The mass proportion Ci of carbon contained in the interior portion of the powder with respect to the entire powder can be calculated from the above expression (II) using the mass proportion Cp and Cs obtained by the above procedure. The carbon contained in the silicon nitride powder may be derived from the silicon powder used as a raw material, or may be derived from the organic binder used in the process of the direct nitriding method. The mass proportion Cs of carbon contained in the surface portion can be reduced by increasing the heating temperature or the heating time during the degreasing. Accordingly, the mass proportion Cp of carbon in the entire powder can also be reduced. On the other hand, when a silicon powder having a low carbon content is used, the mass proportion Ci of carbon contained in the interior portion of the powder can be reduced. Accordingly, the mass proportion Cp of carbon in the entire powder can also be reduced.

A mass proportion Os of the oxygen contained in the surface portion of the powder with respect to the entire silicon nitride powder is 0.9% or less, may be 0.7% or less, or may be 0.5% or less. When such a silicon nitride powder is used as a sintering material, excessive densification can be prevented, and an excessive increase in the density of the silicon nitride sintered body can be prevented. The mass proportion Os of the oxygen contained in the surface portion of the powder with respect to the entire silicon nitride powder may be 0.1% or more, may be 0.2% or more, or may be 0.3% or more. Such a silicon nitride powder is sufficiently densified by liquid phase sintering when it is used as a sintering material. An example of the range of the mass proportion Os of the oxygen contained in the surface portion of the powder is 0.1%-0.9%.

A mass proportion Oi of the oxygen contained in the interior portion of the powder with respect to the entire silicon nitride powder may be 0.7% or less, 0.6% or less, or 0.5% or less. When such a silicon nitride powder is used as a sintering material, a silicon nitride sintered body having sufficiently high thermal conductivity can be obtained. The mass proportion Oi of the oxygen contained in the interior portion of the powder with respect to the entire silicon nitride powder may be 0.1% or more, may be 0.2% or more, or may be 0.3% or more. Such a silicon nitride powder can be manufactured relatively easily. An example of the range of the mass proportion Oi of the oxygen contained in the interior portion of the powder is 0.1%-0.7%.

A mass proportion Op of oxygen with respect to the entire silicon nitride powder (total amount of oxygen) may be 0.3%-1.6%, 0.5%-1.3%, or 0.6%-1.1%. Such a silicon nitride powder has advantages in that it is relatively easy to manufacture the silicon nitride powder by a direct nitriding method, and it is easy to adjust the mass proportion Oi and the mass proportion Os of oxygen contained in the interior portion and the surface portion of the silicon nitride powder to the above-described ranges.

The oxygen in the silicon nitride powder may be contained as silicon-dioxide (SiO₂). Each content of oxygen is obtained by converting such an oxide into oxygen. The mass proportion Os of the oxygen contained in the surface portion of the silicon nitride powder can be adjusted by changing the conditions and time of the surface treatment using hydrogen fluoride. For example, when the time of the surface treatment is increased, the mass proportion Os can be reduced. Accordingly, the mass proportion Op of oxygen in the entire silicon nitride powder can be reduced.

The mass proportion Oi of oxygen contained in the interior portion of the silicon nitride powder can be adjusted by, for example, the oxygen content of the silicon powder used as a material for the direct nitriding method. For example, when a silicon powder having a low oxygen content is used, the mass proportion Oi of oxygen contained in the interior portion of the silicon nitride powder can be reduced. Accordingly, the mass proportion Op of oxygen in the entire silicon nitride powder can be reduced.

The mass proportion Op of oxygen (total amount of oxygen) is obtained by dividing the weight of oxygen contained in the entire silicon nitride powder by the weight of the silicon nitride powder. The mass proportion Os of the oxygen is obtained by dividing the weight of the oxygen contained in the surface portion of the silicon nitride powder by the weight of the entire silicon nitride powder. The mass proportion Oi of oxygen is obtained by dividing the weight of oxygen contained in the interior portion of the silicon nitride powder by the weight of the entire silicon nitride powder. Therefore, the following expression (III) holds for the mass proportion Op, Os, and Oi. $Op \left[%\right] = Os \left[%\right] + Oi \left[%\right]$ (III)

The mass proportion Op, Os and Oi of oxygen in the silicon nitride powder in the present specification are determined by the following procedure using an oxygen/nitrogen analyzer. A sample for measurement is heated from 20°C to 2000°C at a temperature rise rate of 8°C/sec in a helium gas atmosphere. Oxygen desorbed with the temperature rise is detected. At the beginning of the temperature rise, oxygen bonded to the surface of the silicon nitride powder is desorbed. The mass proportion Os of oxygen contained in the surface portion can be obtained by determining the amount of oxygen desorbed.

Thereafter, when the temperature reaches around 1400°C, the silicon nitride begins to decompose. The start of decomposition of silicon nitride can be recognized by the start of detection of nitrogen. When the silicon nitride begins to decompose, oxygen in the interior portion of the silicon nitride powder is desorbed. The amount of oxygen desorbed at this stage is determined, whereby the mass proportion Oi of oxygen contained in the interior portion can be obtained. The mass proportion Op of oxygen can be calculated from the above expression (III) and the mass proportion Os of oxygen, Oi, obtained by the above procedure.

FIG. 1 is an example of a chart obtained by oxygen-nitrogen analysis of silicon nitride. A peak 1 is a peak of oxygen contained in the surface portion of the silicon nitride powder, and a peak 2 is a peak of oxygen contained in the interior portion of the silicon nitride powder. A peak 3 is a peak of nitrogen. A straight line 4 indicates a temperature rise line. The peak 1 and the peak 2 are partitioned with a temperature T₁ where nitrogen gas begins to be generated. The temperature T₁ is a temperature at which the detection of the peak 3 is started, and is usually between 1350-1500°C. The temperature at which the detection of the peak 1 is started (the temperature at the left end of the peak 1) is, for example, 600-1000°C. The temperature at which the detection of the peak 2 ends (the temperature at the right end of the peak 2) is, for example, 1600-1800°C. From the integrated values (areas) of the peaks 1 and 2, the mass proportion Oi of oxygen contained in the interior portion and the mass proportion Os of oxygen contained in the surface portion are obtained based on the calibration curve. The total of the mass proportion Oi of oxygen and the mass proportion Os of oxygen is the mass proportion Op of oxygen contained in the entire silicon nitride powder.

The ratio (Os/Cs) of the mass proportion Os of oxygen to the mass proportion Cs of carbon may satisfy the following expression (I). Accordingly, since the silicon nitride powder has a sufficiently high ratio of oxygen to carbon in the surface portion, liquid phase sintering may be promoted when the silicon nitride powder is used as a sintering material. Therefore, the grain boundary strength of the silicon nitride sintered body is improved. $Os / Cs \geq 10$ (I).

From the viewpoint of improving the grain boundary strength of the silicon nitride sintered body, the ratio (Os/Cs) may be 15 or more, or may be 20 or more. On the other hand, from the viewpoint of preventing excessive densification, the ratio (Os/Cs) may be 70 or less, or may be 50 or less. An example of the range of the ratio (Os/Cs) is 10-70, or 15-70.

A BET specific surface area of the silicon nitride powder may be 10-14 m²/g. When such a silicon nitride powder is used as a sintering material, sintering proceeds smoothly. In addition, the uniformity of the microstructure of the silicon nitride sintered body can be improved. Therefore, it is possible to reduce variations in characteristics such as the strength of the silicon nitride sintered body. From the same viewpoint, the BET specific surface area of the silicon nitride powder may be 11-13 m²/g.

The BET specific surface area in the present specification is a value measured by a BET one-point method using nitrogen gas in accordance with the method described in JIS Z 8830:2013 "Determination of the specific surface area of powders (solids) by gas adsorption-BET method". In the process of the direct nitriding method, the BET specific surface area can be adjusted by changing the pulverization conditions when the fired product after nitriding is pulverized.

The silicon nitride powder may have an α-phase content of 94% or more. When such a silicon nitride powder is used as a sintering material, the β-phase is more likely to be generated. Therefore, it is possible to sufficiently increase the strength of the silicon nitride sintered body while maintaining the density of the silicon nitride sintered body at a sufficiently low level. From the viewpoint of further reducing the manufacturing cost, the α-phase content of the silicon nitride powder may be 97% or less, or 96% or less. The α-phase content of the silicon nitride powder can be determined based on the diffraction line intensity of X-ray diffraction. In the process of the direct nitriding method, the α-phase content of the silicon nitride powder can be adjusted by changing the heating conditions at the time of nitriding. For example, when the heating temperature is increased, the β-phase tends to be generated and the α-phase content tends to be decreased.

The average particle size (D50, median diameter) of the silicon nitride powder may be 0.5-1.2 µm, or may be 0.6-0.9 µm. The particle size distribution in the present specification is measured in accordance with the method described in JIS Z 8825:2013 "Particle size analysis-Laser diffraction methods". In a particle size distribution (cumulative distribution) in which the horizontal axis represents a particle size [µm] on a logarithmic scale and the vertical axis represents a frequency [% by volume], the particle size when the integrated value from the smallest particle size reaches 50% of the whole is the average particle size (D50).

In the particle size distribution, the particle size (D10) when the integrated value from the smallest particle size reaches 10% of the whole may be 0.1-0.45 µm. In the particle size distribution, the particle size (D90) when the integrated value from the smallest particle size reaches 90% of the whole may be 1.3-2.5 µm, or may be 1.5-2.0 µm. In the particle size distribution, the particle size (D100) when the integrated value from the smallest particle size reaches 100% of the whole may be 2.8-5.0 µm, or may be 3.2-4.5 µm.

The silicon nitride powder described above can be suitably used as a sintering material. The silicon nitride powder may be used for a silicon nitride sintered body, but is not limited thereto. The content of silicon nitride in the silicon nitride powder may be 95% by mass or more, 98% by mass or more, or 99% by mass or more. The content of silicon nitride in the silicon nitride powder can be measured by, for example, X-ray diffraction.

The silicon nitride sintered body may have a bending strength of 700 MPa or more, and a ratio of the bending strength to bulk density of 240 MPa·cm³/g or more. The bending strength of the silicon nitride sintered body may be, for example, 700-900 MPa. The bending strength in the present specification is a three-point bending strength at room temperature measured in accordance with JIS R1601:2008.

The bulk density of the silicon nitride sintered body may be 3.1 g/cm³ or less, or may be 3.0 g/cm³ or less, from the viewpoint of weight reduction. From the same viewpoint, the relative density of the silicon nitride sintered body may be 97% or less, or may be 95% or less. In addition, the bulk density of the silicon nitride sintered body may be 2.8 g/cm³ or more, or may be 2.9 g/cm³ or more, from the viewpoint of improving strength. From the same viewpoint, the relative density of the silicon nitride sintered body may be 88% or more, or may be 91% or more. An example of the range of the bulk density of the silicon nitride sintered body is 2.8-3.1 g/cm³. An example of the range of the relative density of the silicon nitride sintered body is 88-97%.

The bulk density of the silicon nitride sintered body in the present specification is measured by the Archimedes method. The relative density of the silicon nitride sintered body in the present specification is a relative value of the bulk density with respect to the theoretical density of silicon nitride 3.17 g/cm³.

The silicon nitride sintered body of the present embodiment may contain components other than silicon nitride and carbon. Carbon may be contained, for example, as silicon carbide. The silicon nitride sintered body of the present embodiment has a low density, a light weight, and a high strength. Therefore, it can be suitably used as, for example, a structural body and a member of a vehicle.

A method for manufacturing silicon nitride powder according to one embodiment includes: a molding step of molding a kneaded material containing a silicon powder and an organic binder to obtain a molded body; a degreasing step of degreasing the molded body by heating the molded body at 900°C or more and less than 1100°C for 1 hour or more; a firing step of firing the molded body under a mixed atmosphere containing nitrogen and at least one selected from a group consisting of hydrogen and ammonia to obtain a fired product containing silicon nitride and carbon; and a pulverization step of pulverizing the fired product.

The oxygen content of the silicon powder used in the molding step may be, for example, 0.2-0.4% by mass. The carbon content of the silicon powder may be 0.05-0.15% by mass. The oxygen content and the carbon content of the silicon powder can be measured by an infrared absorption method. In order to adjust the oxygen concentration before the molding step, a pretreatment liquid containing hydrofluoric acid may be used to reduce the oxygen bound to the silicon powder. The pretreatment liquid may contain hydrofluoric acid, and may be a mixed acid with an acid such as hydrochloric acid.

Examples of the organic binder include a urethane resin, a vinyl butyral resin, a vinyl alcohol resin, a vinyl acetal resin, a vinyl formal resin, a polyimide resin, a phenol resin, a melamine resin, an epoxy resin, a coumarone-indene resin, an acrylic resin, an aromatic vinyl resin, cellulose and cellulose derivatives, wax, and starch. The blending amount of the organic binder may be, for example, 3-30 parts by mass, or may be 5-20 parts by mass with respect to 100 parts by mass of the silicon powder.

The kneaded material may contain a solvent. Examples of the solvent include water, alcohols, ketones, esters, ethers, aromatic hydrocarbons, and polybasic acids. Such a kneaded material is molded by a conventional molding method to produce a molded body. Examples of the molding method include extrusion and uniaxial pressing. The bulk density of the molded body after drying may be 0.5-1.5 g/cm³, or may be 0.8-1.2 g/cm³.

In the degreasing step, the molded body is heated in a heating furnace to decompose and/or volatilize and remove at least a part of the organic binder contained in the molded body. When a solvent is used, a drying step of heating to a temperature equal to or higher than the boiling point of the solvent may be performed prior to the degreasing step.

In the degreasing step, the molded body is heated at 900°C or more and less than 1100°C for 1 hour or more in an atmosphere containing, for example, hydrogen gas. Thus, the organic binder contained in the molded body can be efficiently reduced. The heating temperature in the degreasing step may be 950-1050°C. The heating time in the degreasing step may be 2 hours or more, or may be 3 hours or more, from the viewpoint of sufficiently reducing the organic binder in the molded body. The heating time in the degreasing step may be 20 hours or less, or may be 10 hours or less, from the viewpoint of improving the efficiency of the manufacturing process. An example of the range of the heating time in the degreasing step is 1-20 hours. The atmosphere may be hydrogen gas or a mixed gas having a hydrogen gas concentration of 1.0-10.0% by volume. The volume ratio is a value in a standard state (temperature: 0°C, pressure: 1 atm).

In the firing step, the degreased molded body is fired under a mixed atmosphere containing nitrogen and at least one selected from the group consisting of hydrogen and ammonia to obtain a fired product containing silicon nitride and carbon. The carbon may be contained in the interior portion of the silicon nitride particles or may be attached or bonded as particles to the surface of the silicon nitride particles. The total content of hydrogen and ammonia in the mixed atmosphere may be, for example, 10-40% by volume with respect to the entire mixed atmosphere. The firing temperature may be, for example, 1100-1450°C, or may be 1200-1400°C. The firing time may be, for example, 30-100 hours.

In the pulverization step, the fired product obtained in the firing step is dry-pulverized to obtain a pulverized product. The pulverization step may be performed in a plurality of stages including coarse pulverization and fine pulverization to adjust the particle size distribution of the silicon nitride powder. For example, the pulverization step may include two steps of a ball mill pulverization step and a vibration mill pulverization step. After the fired product is pulverized, a classification step may be performed to adjust the particle size.

The pulverization step or classification step may be followed by a post-treatment step to adjust the oxygen concentration. In the post-treatment step, for example, the pulverized fired product may be dispersed in hydrofluoric acid. Thereafter, filtration and drying may be performed to obtain a silicon nitride powder.

The silicon nitride powder can be manufactured by such a method. This method for manufacturing enables manufacturing silicon nitride powder at a lower manufacturing cost than the imide decomposition method. The shape, composition, and properties of the silicon nitride powder obtained by this method for manufacturing are as described in the embodiment of the silicon nitride powder. Therefore, the contents described in the embodiment of the silicon nitride powder are also applied to the method for manufacturing of the present embodiment. For example, the mass proportion Cp of carbon in the entire powder of the silicon nitride powder obtained by this method for manufacturing may be 0.05% or more. The mass proportion Cs of carbon contained in a surface portion of the silicon nitride powder with respect to the entire silicon nitride powder may be 0.05% or less. However, the above-described method for manufacturing is an example, and the method for manufacturing the silicon nitride powder is not limited to the above-described method for manufacturing.

A method for manufacturing a silicon nitride sintered body according to an exemplary embodiment includes a sintering step of molding and firing a sintering material containing the silicon nitride powder.

The sintering material may contain an oxide-based sintering aid in addition to the silicon nitride powder. Examples of the oxide-based sintering aid include Y₂O₃, MgO, and Al₂O₃. The content of the oxide-based sintering aid in the sintering material may be, for example, 3-10% by mass.

In the sintering step, the sintering material is pressed at a forming pressure of, for example, 3.0-30 MPa to obtain a molded body. The molded body may be manufactured by uniaxial pressing or may be manufactured by CIP. In addition, firing may be performed while molding by hot pressing. The firing of the molded body may be performed in an inert gas atmosphere such as nitrogen gas or argon gas. The firing pressure may be 0.7-1.5 MPa. The firing temperature may be 1860-2100°C, or may be 1880-2000°C. The firing time at the firing temperature may be 6-20 hours, or may be 8-16 hours. The temperature rise rate up to the firing temperature may be, for example, 1.0-10.0°C/hour.

The silicon nitride sintered body thus obtained has a high strength while having a low density because excessive densification is prevented and the β-phase is easily generated. The composition and properties of the silicon nitride sintered body obtained by this method for manufacturing are as described in the embodiment of the silicon nitride sintered body. Therefore, the contents described in the embodiment of the silicon nitride sintered body are also applied to the method for manufacturing of the present embodiment. However, the above-described method for manufacturing is an example, and the method for manufacturing the silicon nitride sintered body is not limited to the above-described method for manufacturing.

### [Example]

Hereinafter, the present disclosure will be described in more detail with reference to Examples and Comparative Examples. However, the present disclosure is not limited to the following examples.

### (Example 1)

### <Preparation of Silicon Nitride Powder>

A silicon powder (oxygen content: 0.3% by mass, carbon content: 0.10% by mass), an organic binder (vinyl alcohol resin), and a solvent (water) were kneaded to obtain a kneaded material. The blending amount of the organic binder was 10 parts by mass with respect to 100 parts by mass of the silicon powder. Using this kneaded material, a molded body (bulk density: 1.0 g/cm³) was manufactured by uniaxial pressure forming (forming pressure: 8 MPa). The obtained molded body was dried in a thermostatic bath at 150°C for 3 hours (drying step). After drying, the molded body was placed in an electric furnace and held in a hydrogen gas atmosphere at a temperature of 1000°C for 2 hours (degreasing step).

The degreased molded body was placed in another electric furnace and fired at 1400°C for 60 hours to obtain a fired product containing silicon nitride. A gaseous mixture of nitrogen and hydrogen gas (a gaseous mixture of N₂ and H₂ mixed at a volumetric ratio of 80%:20% in a standard state) was supplied as an atmosphere during firing. The obtained fired product was coarsely pulverized, and then dry-pulverized with a ball mill. The silicon nitride powder obtained by the dry pulverization was classified using a classifier.

Coarse particles (aggregated particles) were removed from the silicon nitride powder by classification. The mass proportion of the silicon nitride powder after the classification was 80% based on the total mass of the silicon nitride powder before the classification. The silicon nitride powder after the classification means a silicon nitride powder obtained by removing coarse particles. The silicon nitride powder thus obtained was evaluated as follows.

### <Measurement of Mass Proportion of Carbon>

The mass proportion Cp of carbon in the silicon nitride powder was examined using a commercially available carbon/sulfur analyzer (manufactured by LECO Corporation, device name: IR412). As a measurement procedure, a sample was heated from 20°C to 2000°C at a temperature rise rate of 10°C/sec in an oxygen atmosphere. The mass proportion Cp of carbon contained in the entire silicon nitride powder was determined by detecting carbon monoxide and carbon dioxide produced with the temperature rise with an infrared detector.

Using the same measuring apparatus, the mass proportion Cs of carbon contained in the surface portion of the silicon nitride powder was examined. As the measurement procedure, the sample was heated from 20°C to 1000°C at a temperature rise rate of 10°C/sec, and held at 1000°C for 15 minutes. The mass proportion Cs of carbon contained in the surface portion of the silicon nitride powder was determined by detecting carbon monoxide and carbon dioxide produced during the above process with an infrared detector. The mass proportion Ci of carbon contained in the interior portion of the silicon nitride powder was determined by the above expression (II). The mass proportion Cp, Cs and Ci of carbon were as shown in Table 1. The ratio of the mass proportion Cs to the mass proportion Ci is also shown in Table 1.

### <Measurement of Mass Proportion of Oxygen>

The mass proportion Os of oxygen contained in the surface portion of the silicon nitride powder and the mass proportion Oi of oxygen contained in the interior portion of the silicon nitride powder were measured using an oxygen/nitrogen analyzer (manufactured by HORIBA, Ltd., device name: EMGA-920). To be specific, the silicon nitride powder was heated from 20°C to 2000°C at a temperature rise rate of 8°C/sec in a helium atmosphere, and the amount of oxygen before nitrogen gas was detected was quantified to determine the mass proportion Os of oxygen gas. In addition, the amount of oxygen after nitrogen gas started to be detected was quantified to determine the mass proportion Oi of oxygen gas. Further, the mass proportion Os of the oxygen and the mass proportion Oi of the oxygen were totaled to obtain the mass proportion Op of the oxygen in the entire silicon nitride powder. The mass proportion Op, Os, and Oi of the oxygen were as shown in Table 1. The ratio of the mass proportion Os to the mass proportion Cs is also shown in Table 1.

### <Measurement of α-Phase Content>

The α-phase content of the silicon nitride powder was measured by the following procedure. Using an X-ray diffraction apparatus (manufactured by Rigaku Corporation, device name: Ultima IV), the silicon nitride powder was subjected to X-ray diffraction with CuK α rays. The α-phase was represented by a diffraction line intensity Iₐ₁₀₂ of the (102) plane and a diffraction line intensity Iₐ₂₁₀ of the (210) plane, and the β-phase was represented by a diffraction line intensity I_{b101} of the (101) plane and a diffraction line intensity I_{b210} of the (210) plane. Using these diffraction line intensities, the α-phase content was calculated by the following expression. The results were as shown in Table 2. $\begin{matrix}α - phase content \left(%\right) = \\ \left({I}_{a 102}+{I}_{a 210}\right) / \left({I}_{a 102}+{I}_{a 210}+{I}_{b 101}+{I}_{b 210}\right) \times 100\end{matrix}$

### <Measurement of BET Specific Surface Area>

The BET specific surface area of the silicon nitride powder was measured by the BET one-point method using nitrogen gas in accordance with JIS Z 8830:2013. The results were as shown in Table 2.

### <Measurement of Particle Size Distribution>

The particle size distribution of the silicon nitride powder was measured by a laser diffraction/scattering method. The measurement was performed in accordance with the method described in JIS Z 8825:2013 "Particle size analysis-Laser diffraction methods". In a particle size distribution (cumulative distribution) in which the horizontal axis represents a particle size [µm] on a logarithmic scale and the vertical axis represents frequency [% by volume], the particle sizes when the integrated value from the smallest particle size reached 10%, 50%, 90%, and 100% of the whole were obtained as D10, D50, D90, and D100, respectively. The results were as shown in Table 2.

### <Preparation of Silicon Nitride Sintered Body>

The prepared silicon nitride powder, a Y₂O₃ powder having a mean particle size of 1.5 µm, and a Yb₂O₃ powder having a mean particle size of 1.2 µm were blended in a weight ratio of 90:5:5. Methanol was added to the blended powder sample, followed by wet mixing for 4 hours. The mixed powder (sintering material) obtained by drying was subjected to uniaxial pressing at 10 MPa, and further subjected to cold isostatic pressing (CIP) at 25 MPa. The obtained molded body was set in a carbon crucible together with a packing powder composed of a mixed powder of a silicon nitride powder and a BN powder, and fired at a temperature of 1900°C for 10 hours under a nitrogen-pressurized atmosphere of 1 MPa to produce a silicon nitride sintered body.

### <Evaluation of Silicon Nitride Sintered Body>

The three-point bending strength of the silicon nitride sintered body at room temperature was measured in accordance with JIS R1601:2008. The bulk density of the silicon nitride sintered body was measured by the Archimedes method. The results were as shown in Table 3. The ratio of bending strength to bulk density is also shown in Table 3.

### (Example 2)

A silicon nitride powder and a silicon nitride sintered body were prepared under the same conditions as in Example 1 except that the holding time in the degreasing step was changed to 4 hours when the silicon nitride powder was prepared. Then, the silicon nitride powder and the silicon nitride sintered body were measured in the same manner as in Example 1. The results were as shown in Tables 1, 2, and 3.

### (Example 3)

A silicon nitride powder and a silicon nitride sintered body were prepared under the same conditions as in Example 1, except that the holding time in the degreasing step was changed to 6 hours when the silicon nitride powder was prepared. Then, the silicon nitride powder and the silicon nitride sintered body were measured in the same manner as in Example 1. The results were as shown in Tables 1, 2, and 3.

### (Comparative Example 1)

A silicon nitride powder and a silicon nitride sintered body were prepared under the same conditions as in Example 1, except that the holding time in the degreasing step was changed to 0.5 hours when the silicon nitride powder was prepared. Then, the silicon nitride powder and the silicon nitride sintered body were measured in the same manner as in Example 1. The results were as shown in Tables 1, 2, and 3.

**[Table 1]**

| | Mass Proportion of Carbon [%] | | | Mass Proportion of Oxygen [%] | | | Cs/Ci | Os/Cs |
|---|---|---|---|---|---|---|---|---|
| | Surface portion | Interior portion | Total | Surface portion | Interior portion | Total | | |
| | Cs | Ci | Cp | Os | Oi | Op | | |
| Example 1 | 0.05 | 0.10 | 0.15 | 0.40 | 0.44 | 0.84 | 0.54 | 7.3 |
| Example 2 | 0.02 | 0.10 | 0.12 | 0.44 | 0.40 | 0.84 | 0.20 | 22.0 |
| Example 3 | 0.01 | 0.10 | 0.11 | 0.42 | 0.40 | 0.82 | 0.10 | 42.0 |
| Comparative Example 1 | 0.07 | 0.10 | 0.17 | 0.44 | 0.37 | 0.81 | 0.69 | 6.3 |

**[Table 2]**

| | α-phase content | BET Specific Surface Area | Particle Size Distribution | | | |
|---|---|---|---|---|---|---|
| | | | D10 | D50 | D90 | D100 |
| | [%] | [m²/g] | [µm] | [µm] | [µm] | [µm] |
| Example 1 | 93.8 | 11.5 | 0.34 | 0.72 | 1.86 | 3.73 |
| Example 2 | 94.2 | 12.0 | 0.34 | 0.73 | 1.85 | 3.73 |
| Example 3 | 94.1 | 11.8 | 0.34 | 0.72 | 1.86 | 3.73 |
| Comparative Example 1 | 93.4 | 11.5 | 0.34 | 0.73 | 1.87 | 3.73 |

**[Table 3]**

| | Bulk Density | Bending Strength | Bending Strength / Bulk Density |
|---|---|---|---|
| | [g/cm³] | [MPa] | [MPa/(g/cm³)] |
| Example 1 | 3.02 | 730 | 242 |
| Example 2 | 2.91 | 720 | 248 |
| Example 3 | 2.92 | 730 | 250 |
| Comparative Example 1 | 3.03 | 710 | 234 |

As shown in Table 3, the silicon nitride sintered bodies of Examples 1 to 3 had a lower density and a higher strength than those of Comparative Example 1, and the ratio of the bending strength to the bulk density was higher.

### Industrial Applicability

A silicon nitride sintered body having low manufacturing cost, low density, and high strength, and a method for manufacturing the same can be provided. Silicon nitride powder that enables manufacturing a silicon nitride sintered body having low density and high strength at a low manufacturing cost, and a method for manufacturing the silicon nitride powder can be provided.

### Reference Signs List

1, 2, 3: peak.

## Claims

1. A silicon nitride powder containing silicon nitride and carbon,
wherein a mass proportion Cp of the carbon with respect to an entire powder is 0.05% or more,
wherein a mass proportion Cs of carbon contained in a surface portion of the powder with respect to the entire powder is 0.05% or less,
wherein a mass proportion Os of oxygen contained in the surface portion of the powder with respect to the entire powder is 0.9% or less,
wherein the mass proportion Cs is determined by heating the silicon nitride powder from 20°C to 1000°C at a temperature rise rate of 10°C/sec in an air atmosphere, holding the temperature at 1000°C for 15 minutes, and detecting carbon monoxide and carbon dioxide generated during the heating and holding with an infrared detector, and
wherein the mass proportion Os is determined by heating the silicon nitride powder from 20°C to 2000°C at a temperature rise rate of 8°C/sec in a helium gas atmosphere, and measuring the amount of oxygen desorbed before nitrogen is detected using an oxygen/nitrogen analyzer.

2. The silicon nitride powder according to claim 1, wherein a ratio of the mass proportion Cs to a mass proportion Ci of carbon contained in an interior portion of the powder with respect to the entire powder is 0.6 or less.

3. The silicon nitride powder according to claim 1 or 2, wherein the mass proportion Os of oxygen contained in the surface portion of the powder with respect to the entire powder and the mass proportion Cs satisfy a following expression (I): $Os / Cs \geq 10$ (I).

4. The silicon nitride powder according to any one of claims 1 to 3, wherein the mass proportion Os of oxygen contained in the surface portion of the powder with respect to the entire powder is 0.5% or less.

5. The silicon nitride powder according to any one of claims 1 to 4, wherein a BET specific surface area is 10 to 14 m²/g.

6. The silicon nitride powder according to any one of claims 1 to 5, wherein an α-phase content is 94% or more.

7. A method for manufacturing the silicon nitride powder according to any one of claims 1 to 6, the method comprising:
molding a kneaded material containing a silicon powder and an organic binder to obtain a molded body;
degreasing the molded body by heating the molded body at 900°C or more and less than 1100°C for 1 hour or more;
firing the molded body under a mixed atmosphere containing nitrogen and at least one selected from a group consisting of hydrogen and ammonia to obtain a fired product containing silicon nitride and carbon; and
pulverizing the fired product.

8. A method for manufacturing a silicon nitride sintered body, the method comprising:
obtaining a silicon nitride sintered body by using a sintering material containing the silicon nitride powder according to any one of claims 1 to 6 or the silicon nitride powder obtained by the method for manufacturing according to claim 7.

## Patentansprüche

1. Siliciumnitridpulver, das Siliciumnitrid und Kohlenstoff enthält,
wobei ein Massenanteil Cp des Kohlenstoffs bezogen auf das gesamte Pulver 0,05 % oder mehr beträgt,
wobei ein Massenanteil Cs von in einem Oberflächenbereich des Pulvers enthaltenem Kohlenstoff bezogen auf das gesamte Pulver 0,05 % oder weniger beträgt,
wobei ein Massenanteil Os von in dem Oberflächenbereich des Pulvers enthaltenem Sauerstoff bezogen auf das gesamte Pulver 0,9 % oder weniger beträgt,
wobei der Massenanteil Cs bestimmt wird, indem das Siliciumnitridpulver in einer Luftatmosphäre mit einer Temperaturanstiegsrate von 10 °C/s von 20 °C auf 1000 °C erhitzt wird, die Temperatur 15 Minuten lang bei 1000 °C gehalten wird und während des Erhitzens und Haltens erzeugtes Kohlenstoffmonoxid und Kohlenstoffdioxid mit einem Infrarotdetektor detektiert werden, und
wobei der Massenanteil Os bestimmt wird, indem das Siliciumnitridpulver in einer Heliumgasatmosphäre mit einer Temperaturanstiegsrate von 8 °C/s von 20 °C auf 2000 °C erhitzt wird und die Menge an Sauerstoff, die desorbiert wird, bevor Stickstoff detektiert wird, unter Verwendung eines Sauerstoff-/Stickstoff-Analysators gemessen wird.

2. Siliciumnitridpulver nach Anspruch 1, wobei ein Verhältnis des Massenanteils Cs zu einem Massenanteil Ci von in einem Innenbereich des Pulvers enthaltenem Kohlenstoff bezogen auf das gesamte Pulver 0,6 oder weniger beträgt.

3. Siliciumnitridpulver nach Anspruch 1 oder 2, wobei der Massenanteil Os von in dem Oberflächenbereich des Pulvers enthaltenem Sauerstoff bezogen auf das gesamte Pulver und der Massenanteil Cs den folgenden Ausdruck (I) erfüllen: $Os / Cs \geq 10$ (I).

4. Siliciumnitridpulver nach einem der Ansprüche 1 bis 3, wobei der Massenanteil Os von in dem Oberflächenbereich des Pulvers enthaltenem Sauerstoff bezogen auf das gesamte Pulver 0,5 % oder weniger beträgt.

5. Siliciumnitridpulver nach einem der Ansprüche 1 bis 4, wobei eine BETspezifische Oberfläche 10 bis 14 m²/g beträgt.

6. Siliciumnitridpulver nach einem der Ansprüche 1 bis 5, wobei ein α-Phasenanteil 94 % oder mehr beträgt.

7. Verfahren zur Herstellung des Siliciumnitridpulvers nach einem der Ansprüche 1 bis 6, wobei das Verfahren Folgendes umfasst:
Formen einer Knetmasse, die ein Siliciumpulver und ein organisches Bindemittel enthält, um einen Formkörper zu erhalten;
Entfetten des Formkörpers durch Erhitzen des Formkörpers bei 900 °C oder mehr und weniger als 1100 °C für eine Dauer von 1 Stunde oder mehr;
Brennen des Formkörpers unter einer Mischatmosphäre, die Stickstoff und mindestens eines, ausgewählt aus einer Gruppe bestehend aus Wasserstoff und Ammoniak, enthält, um ein gebranntes Produkt zu erhalten, das Siliciumnitrid und Kohlenstoff enthält;
und
Pulverisieren des gebrannten Produkts.

8. Verfahren zur Herstellung eines Siliciumnitridsinterkörpers, wobei das Verfahren Folgendes umfasst:
Erhalten eines Siliciumnitridsinterkörpers unter Verwendung eines Sintermaterials, das das Siliciumnitridpulver nach einem der Ansprüche 1 bis 6 oder das durch das Herstellungsverfahren nach Anspruch 7 erhaltene Siliciumnitridpulver enthält.

## Revendications

1. Poudre de nitrure de silicium contenant du nitrure de silicium et du carbone,
dans laquelle une proportion massique Cp du carbone par rapport à une poudre entière est de 0,05 % ou plus,
dans laquelle une proportion massique Cs de carbone contenu dans une portion de surface de la poudre par rapport à la poudre entière est de 0,05 % ou moins,
dans laquelle une proportion massique Os d'oxygène contenu dans la portion de surface de la poudre par rapport à la poudre entière est de 0,9 % ou moins,
dans laquelle la proportion massique Cs est déterminée en chauffant la poudre de nitrure de silicium de 20 °C à 1 000 °C à une vitesse de montée en température de 10 °C/s dans une atmosphère d'air, en maintenant la température à 1 000 °C pendant 15 minutes, et en détectant le monoxyde de carbone et le dioxyde de carbone générés pendant le chauffage et le maintien au moyen d'un détecteur infrarouge, et
dans laquelle la proportion massique Os est déterminée en chauffant la poudre de nitrure de silicium de 20 °C à 2 000 °C à une vitesse de montée en température de 8 °C/s dans une atmosphère de gaz hélium, et en mesurant la quantité d'oxygène désorbée avant que l'azote soit détecté en utilisant un analyseur d'oxygène/azote.

2. Poudre de nitrure de silicium selon la revendication 1, dans laquelle un rapport entre la proportion massique Cs et une proportion massique Ci de carbone contenu dans une portion intérieure de la poudre par rapport à la poudre entière est de 0,6 ou moins.

3. Poudre de nitrure de silicium selon la revendication 1 ou la revendication 2, dans laquelle la proportion massique Os d'oxygène contenu dans la portion de surface de la poudre par rapport à la poudre entière et la proportion massique Cs satisfont à l'expression suivante (I) : $Os / Cs \geq 10$ (I).

4. Poudre de nitrure de silicium selon l'une quelconque des revendications 1 à 3, dans laquelle la proportion massique Os d'oxygène contenu dans la portion de surface de la poudre par rapport à la poudre entière est de 0,5 % ou moins.

5. Poudre de nitrure de silicium selon l'une quelconque des revendications 1 à 4, dans laquelle une surface spécifique BET est de 10 à 14 m²/g.

6. Poudre de nitrure de silicium selon l'une quelconque des revendications 1 à 5, dans laquelle une teneur en phase α est de 94 % ou plus.

7. Procédé de fabrication de la poudre de nitrure de silicium selon l'une quelconque des revendications 1 à 6, le procédé comprenant :
le moulage d'un matériau malaxé contenant une poudre de silicium et un liant organique pour obtenir un corps moulé ;
le dégraissage du corps moulé en chauffant le corps moulé à 900 °C ou plus et à moins de 1 100 °C pendant 1 heure ou plus ;
la cuisson du corps moulé sous une atmosphère mixte contenant de l'azote et au moins un élément sélectionné parmi un groupe consistant en hydrogène et ammoniac pour obtenir un produit cuit contenant du nitrure de silicium et du carbone ; et
la pulvérisation du produit cuit.

8. Procédé de fabrication d'un corps fritté en nitrure de silicium, le procédé comprenant :
l'obtention d'un corps fritté en nitrure de silicium en utilisant un matériau de frittage contenant la poudre de nitrure de silicium selon l'une quelconque des revendications 1 à 6 ou la poudre de nitrure de silicium obtenue par le procédé de fabrication selon la revendication 7.
